# EUROPEAN PATENT APPLICATION

(11) **EP 3 029 511 A1**
(43) Date of publication of application: **08.06.2016**
(21) Application number: 15181576.8
(22) Date of filing: 19.08.2015
(51) Int. Cl.: G02C 13/00, G06K 9/00

(54) **MULTIPLE-REFERENCE BASED SYSTEM AND METHOD FOR ORDERING EYEGLASSES**

(30) Priority: 04.12.2014 US 201414560922
(71) Applicant: Welsky Technologies Limited, San Po Kong, Kowloon, Hong Kong (HK)
(72) Inventor: Lee, Keung, Hong Kong (HK); Lee, Ka Suen, Hong Kong (HK)
(74) Representative: Bohnenberger, Johannes

(57) **Abstract**

The present invention relates to a multiple-reference based system and a method for ordering eyeglasses. Particularly, the multiple-reference based system comprise an user interfacing function, an image capturing function, an image processing function and a design function, wherein the design function is for determining desired design data and corresponding specific reference points and/or lines of eyeglass frames by applying a plurality of design rules in dependency on the specific reference points of the portrait of the eyeglasses wearer determined by the image processing function. Further, the multiple-reference based system and method may be implemented through a public network with a mobile device.

## Description

### BACKGROUND OF THE INVENTION

### 1. Field of Invention

The present invention relates to a multiple-reference based system and a method for ordering eyeglasses. Particularly, the present invention relates to a system and a method for selecting and ordering eyeglass frames through a public network with a mobile device.

### 2. Related Arts

Conventionally, customers who want to purchase eyeglass frames for their prescription lenses visit an optometrist's or optician's shop, try on different frames in front of a mirror. One problem with this method is that a wide variety of frames must always be physically present in the shop to accommodate for the many different tastes, styles and size requirements of customers. Attempts to solve the above-discussed problem have resulted in ordering systems that permit the customer to go through electronic catalogue of eyeglass frames, virtually try on the glasses and place an order remotely.

Further, it has been proposed a system for ordering eyeglasses, comprising a data processing center suitable for users to assess through a public communication network with a user terminal display, a matching and selection unit, a user portrait image and data uploading platform which is connected with the data processing center through the public communication network.

However, even if the prior eyeglasses ordering systems may shortlist those eyeglass frames matched with the frame size requirements of the eyeglasses wearer for the eyeglasses wearer to try on and order eyeglasses remotely, there is still a wide variety of frames with different styles for selection which may take the eyeglasses wearer a long time to go through the whole list. Therefore, it is desirable to provide an eyeglasses ordering system comprising a consultation function, wherein a list of eyeglass frames are recommended according to style requirements of eyeglasses wearers so that the shortlisted eyeglass frames may better reflect the eyeglasses wearer's preferences and the time required for going though the list of eyeglass frames may be greatly reduced.

In general, an eyeglasses made-to-order system includes a computer controlled display screen for the operator to determine eyeglasses specifications necessary for ordering eyeglasses; a basic design selecting function for selecting from the display screen any of a plurality of basic frame designs stored in a database in advance; a portrait capturing function for taking portraits for the eyeglasses wearers; a try-on function comprising generating a synthetic image by overlaying the image of the selected frames over the portrait on the screen and displaying the synthetic image on the display screen; one or more changing functions for changing, revising or inputting necessary items on the display screen, relating to each of the plurality of structural members of the eyeglasses, including the frame type, lens shape, and parts, based on the basic frame design selected using the basic design selecting function; a storing function for storing data including one or more images of the eyeglasses attained on the display screen; a comparing/examining function for comparing or examining the one or more eyeglass images, including the eyeglass images stored in the storing means, displayed on the display screen, deciding upon one of those, or returning to the step for performing the changing function, and a order placing function for the operator of place a order for the selected eyeglass frame.

For abovementioned try-on function, different methods for determining reference points of the facial portraits of the eyeglasses wearer were tried, wherein the coordinates of both corneal vertexes are found on the portrait and a line connecting the corneal vertexes is found, and the bisection point of that line is determined to be a reference point for the portrait and the frame image is laid over on the portrait with the reference point of the frame image matched to the reference point for the portrait.

However, in the abovementioned methods, the reference points of the facial portrait of the eyeglasses wearer are determined according to the positions of corneal vertexes which may not be able to accommodate the situation where the facial features of eyeglasses wearer are not symmetrical. For example the eyeglasses wearer may have strabismus (so called crossed eyes) which is a condition which eyes do not line up properly. In this situation, the bisection point of the line connecting the corneal vertexes may not align with the reference point of the eyeglass frame.

With consideration of the asymmetry of facial features, a method is proposed wherein reference points for the portrait captured are determined using actual measurements relative to the placement of the eyeglasses wearer's eye such as the measured values of the distances from the bridge of the eyeglasses wearer's nose to each of the corneal vertexes. The point at which a line connecting the corneal vertexes on the portrait is divided according to the ratio of the aforesaid measure distances to the vertexes is a reference point for the aforesaid portrait (see US Patent No. 6,533,418, for example).

However, in the abovementioned method, it is not feasible to match the specific reference points of the facial portrait with the corresponding reference points of eyeglass frame stored in a database of eyeglass frames which are available in the market place, as it is a standard that the left and right parts of an eyeglass frame are symmetrical. Moreover, the information of positions of corneal vertexes is not good enough for recommending a style of eyeglass frames because the size of eyes also has significant impact to the outlook of wearing eyeglasses. Therefore, it is desirable to provide a system and a method for the same wherein the reference points of the facial portrait for matching the corresponding reference points of the eyeglass frame is determined by measuring the size and positions of eyes on the facial portrait so that the system may recommend a list of eyeglass frames of styles better fit the eyeglasses wearer's facial features.

### BRIEF SUMMARY OF THE INVENTION

An object of the present invention is to provide an improved system and a method for the same wherein the reference points of the facial portrait for matching the structural feature points of the eyeglass frame is determined by measuring the size and positions of eyes on the facial portrait so that the eyeglasses ordering system may recommend a list of eyeglass frames of styles better fit the eyeglass wearer's facial features.

Accordingly, in one aspect of the present invention, there is provided a system for ordering eyeglasses comprising:
- an user interfacing function for a user to input or change eyeglass frame design preference parameters including styles of eyeglass frames and styles of lens holders;
- an image capturing function for obtaining at least one images of front view and at least one images of side view of a portrait of an eyeglasses wearer;
- an image processing function for analyzing the images of the portrait of the eyeglasses wearer obtained by the image capturing function to generate a 3D model of the portrait of the eyeglasses wearer and determine at least one specific reference points of the portrait of the eyeglasses wearer;

- a design function for determining desired design data and corresponding specific reference points and/or lines of eyeglass frames by applying a plurality of design rules in dependency on the specific reference points of the portrait of the eyeglasses wearer determined by the image processing function and/or design preference parameters input by the user; wherein the specific reference points of a portrait of a eyeglasses wearer include:
   - a right turning point, which is the highest point of the interface between the right ear and the right side face;
   - a left turning point which is the highest point of the interface between the left ear and the left side face;
   - a right lateral canthus;
   - a left lateral canthus;
   - a vertex of a right cheek;
   - a vertex of a left cheek;
   - a right medial canthus; and
   - a left medial canthus;
   and the corresponding specific reference points and/or lines of a eyeglass frame include:
   - a right temple bending point where the temple bend around the right ear;
   - a left temple bending point where the temple bend around the left ear;
   - an outer edge of a right frame;
   - an outer edge of a left frame;
   - a lower edge of a right frame;
   - a lower edge of a left frame;
   - a right nose pad point; and
   - a left nose pad point.

In another aspect of the present invention, the desired design data of the eyeglass frame include the height of the lens holders of the eyeglass frame which is equal to a predefined parameter, H1, which is determined from a look up table in dependence upon the style of lens-holder inputted by the user.

In another aspect of the present invention, the corresponding specific reference points and/or lines of the eyeglass frame are determined with the design rules as listed below:
- the right turning point coincides with the right temple bending point;
- the left turning point coincides with the left temple bending point;
- the outer edge of the right frame is at a predefined distance W1 measured horizontally from the right lateral canthus;
- the outer edge of the left frame with is at a predefined distance W1 measured horizontally from the left lateral canthus;
- the right nose pad point is at a point on the right side of the bridge of the nose of the eyeglasses wearer which is at a predefined distance Y1 lower than the right medial canthus;
- the left nose pad point at a point on the left side of the bridge of the nose of the eyeglasses wearer which is at a predefined distance Y1 lower than the left medial canthus;
- the lower edge of the right frame is at the same level as the vertex of the right cheek; and
- the lower edge of the left frame is at the same level as the vertex of the left cheek;
wherein the predefined distance W1 is determined from a look up table in dependence upon the style of eyeglass frame input by the user.

Another object of the present invention is to provide an improved system and a method for the same comprising a consultation function wherein a list of eyeglass frames are recommended according to style requirements of eyeglasses wearers so that the shortlisted eyeglass frames may better reflect the eyeglass wearer's preferences such as colors, material, weight, style of eyeglasses, and the time required for going though the list of eyeglass frames may be greatly reduced.

Accordingly, in another aspect of the present invention, the abovementioned system for ordering eyeglasses further comprising:
- a central database for storing design data and corresponding specific reference points and/or lines of eyeglass frames which are available in the marketplace, wherein the design data including but not limited to heights of lens holders of eyeglass frames;
- a matching function for matching the design data and the corresponding specific reference points and/or lines of eyeglass frames determined by the design function with the design data and corresponding specific reference points and/or lines of eyeglass frames stored in the central database to generate a list of matched eyeglass frames;
- a tele-consultation function for recommending a list of recommended eyeglass frames out of the matched eyeglass frames generated by the matching function according to the eyeglass frame design preference parameters input by the user and displaying the list of recommended eyeglass frames for the user to select;
- a virtual try-on function for overlaying the image of the eyeglass frame selected by the user on the portrait of the eyeglasses wearer obtained by the image capturing function (102) and transmitted an image of a portrait wearing the eyeglass to the user interfacing function to display for the user to view and confirm a purchasing order; and
- an order handling function for handling a purchasing order of eyeglasses confirmed by the user, tracking order status and permitting the user to receive notifications regarding the said purchasing order.

Advantageously, in another aspect of the present invention, the user can arbitrarily select and perform any one or more of the user interfacing function, the image capturing function, the image processing function, the design function, the matching function, the tele-consultation function, the virtual try-on function or the order handling function.

Preferably, in further aspect of the present invention, the abovementioned system can be is arranged to be implemented in a mobile device such as mobile-phones and smart-phones.

### BRIEF DESCRIPTION OF THE SEVERAL VIEWS OF THE DRAWING

FIG. 1 is the block diagram showing the functions of an eyeglasses ordering system according to a preferred embodiment of the present invention.
FIG. 2(a)-(c) illustrate the specific reference points of a portrait of an eyeglasses wearer according to the present invention.
FIG. 3(a)-(b) illustrate the desired design data and the corresponding specific reference points and/or lines of the eyeglass frame according to the present invention.

### DETAILED DESCRIPTION OF THE INVENTION

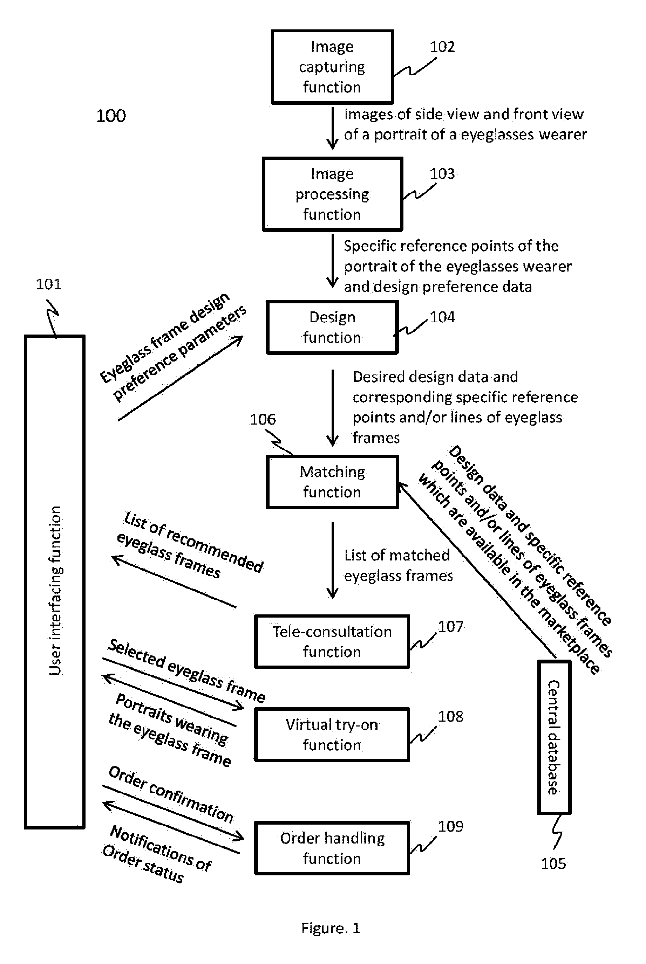

Referring to Figure 1, a system **100** for ordering eyeglasses according to a preferred embodiment of the present invention is illustrated, wherein the system comprises an user interfacing function **101,** an image capturing function **102,** an image processing function **103,** a design function **104,** a central database **105,** a matching function **106,** a tele-consultation function **107,** a virtual try-on function **108,** and an order handling function **109.**

The user interfacing function **101** is for the user to input or change eyeglass frame design preference parameters and information required for making eyeglasses, displaying lists of recommended eyeglass frames and portraits wearing the eyeglass frame for the user to select and confirm purchasing orders. Preferably, the eyeglass frame design preference parameters may include colors, materials, weight, styles of eyeglass frames and styles of lens holders. The information required for making eyeglasses may include lens prescriptions, pupillary distances and other facial measurement data.

The image capturing function **102** is for obtaining at least one images of front view of a portrait and at least one images of side view of a portrait of an eyeglasses wearer. In one preferred embodiment of the present invention, the images of the portrait of the eyeglasses wearer may be captured with the built-in camera of a mobile device.

The image processing function **103** is for analyzing the images of the portrait of the eyeglasses wearer obtained by the image capturing function **102** to generate a 3D model of the portrait of the eyeglasses wearer and determine at least one specific reference points of the portrait of the eyeglasses wearer.

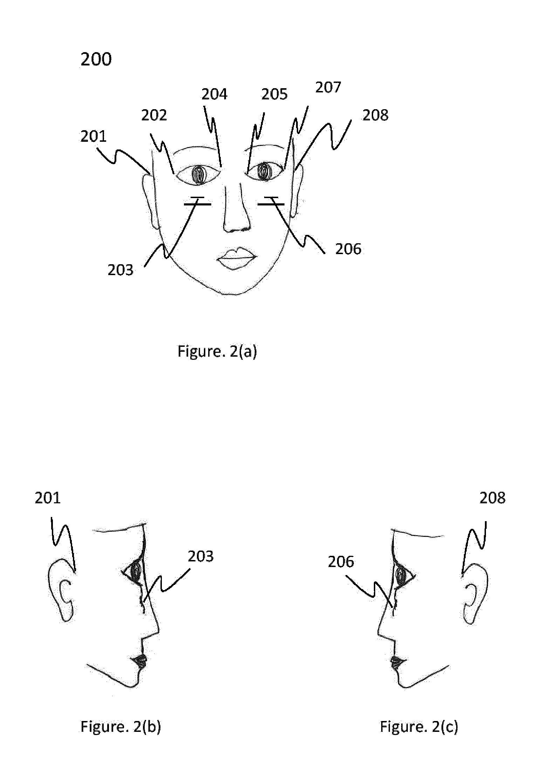

Referring to Fig.2(a) to 2(c), eight specific reference points may be defined from a portrait of a eyeglasses wearer **200** according to a preferred embodiment of the present invention. Preferably, the said specific reference points may include a right turning point **201** which is the highest point of the interface between the right ear and the right side face, a left turning point **208** which is the highest point of the interface between the left ear and the left side face, a right lateral canthus **202,** a left lateral canthus **207,** a vertex of a right cheek **203** which is the highest point on a contour map of the right cheek extracted from the 3D model of the portrait of the eyeglasses wearer, a vertex of a left cheek **206** which is the highest point on a contour map of the left cheek extracted from the 3D model of the portrait of the eyeglasses wearer, a right medial canthus **204,** and a left medial canthus **205.**

The design function **104** is for determining desired design data and corresponding specific reference points and/or lines of eyeglass frames by applying a plurality of design rules in dependency on the specific reference points of the portrait of the eyeglasses wearer determined by the image processing function **103** and/or design preference parameters input by the user.

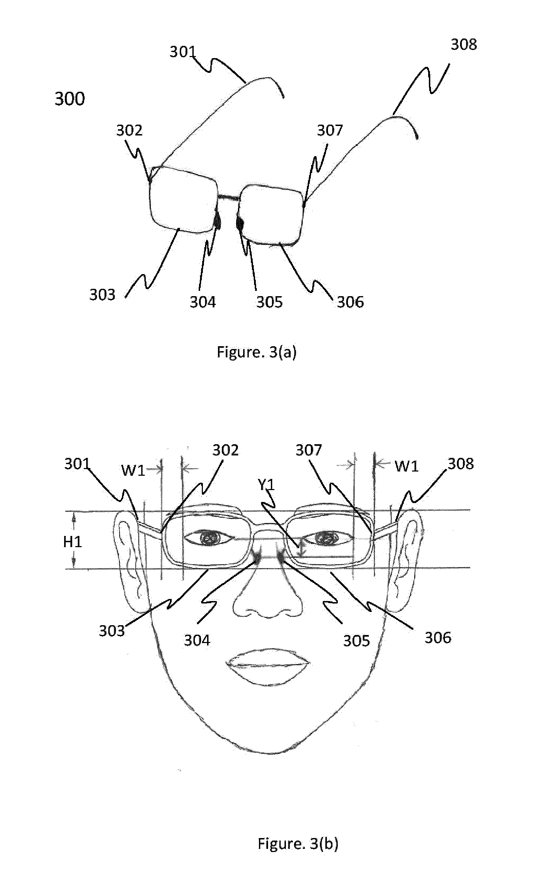

Referring to Fig.3(a), eight corresponding specific reference points and/or lines and/or lines may be defined on an eyeglass frame **300** according to a preferred embodiment of the present invention. These corresponding specific reference points and/or lines include a right temple bending point **301,** where the temple bend around the right ear, a left temple bending point **308** where the temple bend around the left ear, an outer edge of a right frame **302,** an outer edge of a left frame **307,** a lower edge of a right frame **303,** a lower edge of a left frame **306,** a right nose pad point **304,** and a left nose pad point **305.** In addition, the height of the lens-holder of the eyeglass frame may be defined as one of the desired design data.

Figure 3(b) illustrates how the corresponding specific reference points and/or lines are determined according to a preferred embodiment of the present invention. The right and left temple bending points **301, 308** may be determined with a design rule which the right and left turning points **201, 208** coincide with the right and left temple bending points **301, 308** respectively. The outer edges of the right and left frames **302, 307** may be determined with a design rule which the outer edges of the right and left frames **302, 307** are at a predefined distance W1 measured horizontally from the right and left lateral canthi **202, 207,** respectively. The right and left nose pad points **304, 305** are determined with a design rule which the right and left nose pad points **304, 305** are at points on the bridge of the nose of the eyeglasses wearer which are at a predefined distance Y1 lower than the right and left medial canthi **204, 205,** respectively. The lower edges of the right and left frames **303, 306** are determined with a design rule which the lower edges of the right and left frames **303, 306** are at the same level as the vertexes of the right and left cheeks **203, 206,** respectively. In addition, the height of the lens-holders of the eyeglass frame is equal to a predefined parameter, H1.

According to one embodiment of the present invention, the predefined distance Y1 is in the range from 0.5 to 1.5 cm. Preferably, the predefined distance Y1 is 1cm.

The predefined distance W1 may be determined from a 1st look-up table in dependence upon the styles of eyeglass frame input by the user as shown below:

**Table 1: Look-up Table for predefined distance W1 in dependency upon the styles of eyeglass frames**

| **Values of predefined distance W1** | **Styles of Eyeglass frames** |
|---|---|
| 0cm < W1≤2.0 cm | Sporty |
| 2.0 cm < W1 < 3.5 cm | General-Use |
| 3.5cm ≤ W1 | Stylist |

The predefined parameter H1 is determined from a 2nd look-up table in dependence upon the styles of lens-holders input by the user as shown below:

**Table 2: Look-up Table for predefined parameter H1 in dependency upon the styles of lens-holders**

| **Values of predefined parameter H1** | **Styles of Lens-holders** |
|---|---|
| 0cm < H1 ≤ 2.5 cm | Narrow |
| 2.5 cm < H1 < 4.0 cm | Normal |
| 4.0 cm ≤ H1 | Oversize |

Accordingly, eyeglass frames may be grouped into 9 groups based on the styles of lens-holder and the styles of eyeglass frame, namely, Sporty Narrow, Sporty Normal, Sporty Oversize, General-Use Narrow, General-Use Normal, General-Use Oversize, Stylist Narrow, Stylist Normal and Stylist Oversize, wherein the a Table of Style Selection as shown below may be displayed with the user interfacing function **101** to the user to select among the said 9 groups of eyeglass frames.

**Table 3: Table of Style Selection**

| **Eyeglass-frame styles** | *0 cm* < *W1* ≤ *2.0cm* | *2.0 cm < W1 < 3.5 cm* | *3.5 cm* ≤ *W1* |
|---|---|---|---|
| *H1 < 2.5 cm* | *Sporty Narrow* | *General-Use Narrow* | *Stylist Narrow* |
| *2.5 cm* ≤ *H1≤ 4.0 cm* | *Sporty Normal* | *General-Use Normal* | *Stylist Normal* |
| *4.0 cm < H1* | *Sporty Oversize* | *General-Use Oversize* | *Stylist Oversize* |

The central database **105** is for storing design data and corresponding specific reference points and/or lines of eyeglass frames which are available in the marketplace. The design data may include but not limited to colors, materials, weight of eyeglass frames and heights of lens holders of eyeglass frames.

The matching function **106** is for matching the design data and the corresponding specific reference points and/or lines of eyeglass frames determined by the design function **104** with the design data and the corresponding specific reference points and/or lines of eyeglass frames stored in the central database **105** to generate a list of matched eyeglass frames.

The tele-consultation function **107** is for recommending a list of eyeglass frames out of the matched eyeglass frames generated by the matching function **106** according to the eyeglass frame design preference parameters input by the user and transmitting the list of recommended eyeglass frames to the user interfacing function **101** to display for the user to select.

The virtual try-on function **108** is for overlaying the image of the eyeglass frame selected by the user on the portrait of the eyeglasses wearer obtained by the image capturing function (102) and transmitted an image of a portrait wearing the eyeglass to the user interfacing function **101** to display for the user to view and confirm a purchasing order;

The order handling function **109** is for handling a purchasing order of eyeglasses confirmed by the user, tracking order status and permitting the user to receive notifications regarding the said purchasing order through the user interfacing function **101.**

According to the preferred embodiment of the present invention, the system **100** may be implemented in a mobile device such as mobile-phones and smart-phones. The user interfacing function **101,** the image processing function **103,** the design function **104,** the matching function **106,** the tele-consultation function **107,** the virtual try-on function **108** and the order handling function **109** may be implemented with the touch-screen display and the processor of the mobile device, the image capturing function **102** may be implemented with the built-in camera of the mobile device, and the central database **105** may be implemented with the memory of the mobile device. The central database **105** may be updated regularly by communicating with one or a plurality of central servers through public tele-communication networks. The central servers may be maintained by one or a plurality of eyeglass manufacturers or design houses.

With the system for ordering eyeglasses according to embodiment discussed in detail above, the user can arbitrarily select and perform any one or more of the functions and/or processes believed necessary for the design decisions can be made. Therefore, the said system can more efficiently fulfill the user's requirements and reflect eyeglasses wearer's preference and sensibility.

## Claims

1. A system (100) for ordering eyeglasses, comprising
an user interfacing function (101) for a user to input or change eyeglass frame design preference parameters including styles of eyeglass frames and styles of lens holders;
an image capturing function (102) for obtaining at least one images of front view of a portrait and at least one images of side view of a portrait of an eyeglasses wearer;
an image processing function (103) for analyzing the images of the portrait of the eyeglasses wearer obtained by the image capturing function to generate a 3D model of the portrait of the eyeglasses wearer and determine at least one specific reference points of the portrait of the eyeglasses wearer;
a design function (104) for determining desired design data and corresponding specific reference points and/or lines of eyeglass frames by applying a plurality of design rules in dependency on the specific reference points of the portrait of the eyeglasses wearer determined by the image processing function (103) and/or design preference parameters input by the user;
wherein
the specific reference points of the portrait of the eyeglasses wearer include
a right turning point (201) which is the highest point of the interface between a right ear and a right side face;
a left turning point (208) which is the highest point of the interface between a left ear and a left side face;
a right lateral canthus (202);
a left lateral canthus (207);
a vertex of a right cheek (203);
a vertex of a left cheek (206);
a right medial canthus (204); and
a left medial canthus (205);
the desired design data includes a height of the lens holders of the eyeglass frame;
the corresponding specific reference points and/or lines of a eyeglass frame include
a right temple bending point where the temple bend around the right ear (301);
a left temple bending point where the temple bend around the left ear(308);
an outer edge of a right frame (302);
an outer edge of a left frame (307);
a lower edge of a right frame (303);
a lower edge of a left frame (306);
a right nose pad point (304); and
a left nose pad point (305).

2. A system for ordering eyeglasses according to claim 1, wherein the design rules include:
the right turning point (201) coincides with the right temple bending point (301);
the left turning point (208) coincides with the left temple bending point (308);
the outer edge of the right frame (302) is at a predefined distance W1 measured horizontally from the right lateral canthus (202);
the outer edge of the left frame (307) with is at a predefined distance W1 measured horizontally from the left lateral canthus (207);
the right nose pad point (304) is at a point on the right side of the bridge of the nose of the eyeglasses wearer which is at a predefined distance Y1 lower than the right medial canthus (204);
the left nose pad point (305) at a point on the left side of the bridge of the nose of the eyeglasses wearer which is at a predefined distance Y1 lower than the left medial canthus (205);
the lower edge of the right frame (303) is at the same level as the vertex of the right cheek (203);
the lower edge of the left frame (306) is at the same level as the vertex of the left cheek (206); and
the height of the lens holders of the eyeglass frame is equal to a predefined parameter H1.

3. A system for ordering eyeglasses according to claim 2, wherein the user interfacing function (101) is further used for the user to select eyeglass frames and confirm purchasing orders; and
the system further comprising:
a central database (105) for storing design data and corresponding specific reference points and/or lines of eyeglass frames which are available in the marketplace, wherein the design data including but not limited to heights of lens holders of eyeglass frames;
a matching function (106) for matching the design data and the corresponding specific reference points and/or lines of eyeglass frames determined by the design function (104) with the design data and corresponding specific reference points and/or lines of eyeglass frames stored in the central database (105) to generate a list of matched eyeglass frames;
a tele-consultation function (107) for recommending a list of recommended eyeglass frames out of the matched eyeglass frames generated by the matching function (106) according to the eyeglass frame design preference parameters input by the user and transmitting the list of recommended eyeglass frames to the user interfacing function (101) to display for the user to select;
a virtual try-on function (108) for overlaying the image of the eyeglass frame selected by the user on the portrait of the eyeglasses wearer obtained by the image capturing function (102) and transmitted an image of a portrait wearing the eyeglass to the user interfacing function (101) to display for the user to view and confirm a purchasing order; and
an order handling function (109) for handling the purchasing order of eyeglasses confirmed by the user, tracking order status and permitting the user to receive notifications regarding the said purchasing order.

4. A system for ordering eyeglasses according to Claim 3, wherein the system is arranged to be implemented in a mobile device such as mobile-phones and smart-phones.

5. A system for ordering eyeglasses according to Claim 3, wherein user can arbitrarily select and perform any one or more of the user interfacing function, the image capturing function, the image processing function, the design function, the matching function, the tele-consultation function, the virtual try-on function or the order handling function.

6. A system for ordering eyeglasses according to claim 3, wherein
the predefined distance W1 is determined from a 1^{st} look up table in dependence upon the style of eyeglass frame input by the user; and
the predefined parameter H1 is determined from a 2^{nd} look up table in dependence upon the style of lens-holder by the user.

7. A system for ordering eyeglasses according to claim 6, wherein
the 1^{st} look up table correlate ranges of the predefined distance W1 to the styles of eyeglass frames such that
0cm < W1≤2.0 cm correspond to Sporty styles of eyeglass frames;
2.0 cm < W1 < 3.5 cm correspond to General-Use styles of eyeglass frames; and
3.5 cm ≤ W1 correspond to Stylist styles of eyeglass frames;
the 2^{nd} look up table correlate ranges of the predefined parameter H1 to the styles of lens holders such that
0cm < H1 < 2.5 cm correspond to Narrow styles of lens holders;
2.4 cm < H1 < 4.0 cm correspond to Normal styles of lens holders; and
4.0 cm < H1 correspond to Oversize styles of lens holders.

8. A system for ordering eyeglasses according to claim 7, wherein the predefined distance Y1 is 1 cm.

9. A method for ordering eyeglasses comprising steps of:
a) requesting an user or providing an interface for the user to input or change eyeglass frame design preference parameters including styles of eyeglass frames and styles of lens-holders;
b) obtaining at least one images of front view and at least one images of side view of a portrait of a eyeglasses wearer and analyzing the obtained images of the portrait of the eyeglasses wearer to generate a 3D model of the portrait of the eyeglasses wearer and determine at least one specific reference points of the portrait of the eyeglasses wearer;
c) determining desired design data and corresponding specific reference points and/or lines of eyeglass frames by applying a plurality of design rules in dependency on the specific reference points of the portrait of the eyeglasses wearer determined in step b) and/or design preference parameters input by the user in step a);
wherein
the specific reference points of the portrait of the eyeglasses wearer include
a right turning point (201) which is the highest point of the interface between a right ear and a right side face;
a left turning point (208) which is the highest point of the interface between a left ear and a left side face;
a right lateral canthus (202);
a left lateral canthus (207);
a vertex of a right cheek (203);
a vertex of a left cheek (206);
a right medial canthus (204); and
a left medial canthus (205);
the desired design data includes a height of the lens holders of the eyeglass frame;
the corresponding specific reference points and/or lines of a eyeglass frame include a right temple bending point where the temple bend around the right ear (301);
a left temple bending point where the temple bend around the left ear(308);
an outer edge of a right frame (302);
an outer edge of a left frame (307);
a lower edge of a right frame (303);
a lower edge of a left frame (306);
a right nose pad point (304); and
a left nose pad point (305).

10. A method for ordering eyeglasses according to claim 9, wherein the design rules include:
the right turning point (201) coincides with the right temple bending point (301);
the left turning point (208) coincides with the left temple bending point (308);
the outer edge of the right frame (302) is at a predefined distance W1 measured horizontally from the right lateral canthus (202);
the outer edge of the left frame (307) with is at a predefined distance W1 measured horizontally from the left lateral canthus (207);
the right nose pad point (304) is at a point on the right side of the bridge of the nose of the eyeglasses wearer which is at a predefined distance Y1 lower than the right medial canthus (204);
the left nose pad point (305) at a point on the left side of the bridge of the nose of the eyeglasses wearer which is at a predefined distance Y1 lower than the left medial canthus (205);
the lower edge of the right frame (303) is at the same level as the vertex of the right cheek (203);
the lower edge of the left frame (306) is at the same level as the vertex of the left cheek (206); and
the height of the lens holders of the eyeglass frame is equal to a predefined parameter H1.

11. A method for ordering eyeglasses according to claim 10, further comprising steps of:
d) storing design data and corresponding specific reference points and/or lines of eyeglass frames which are available in the marketplace, wherein the design data including but not limited to heights of lens holders of eyeglass frames;
e) matching the desired design data and corresponding specific reference points and/or lines of eyeglass frames determined in step c) with the design data and corresponding specific reference points and/or lines of eyeglass frames stored in step d) to generate a list of matched eyeglass frames;
f) recommending a list of recommended eyeglass frames out of the matched eyeglass frames generated in step e) according to the eyeglass frame design preference parameters input by the user in step a) and displaying a list of recommended eyeglass frames for the user to select;
g) overlaying an image of a eyeglass frame selected by the user from the list of recommended eyeglass frames recommended in step f) on the portrait of the eyeglasses wearer obtained in step b) and displaying a portrait wearing the eyeglass frame for the user to view and confirm a purchasing order;
h) handling the purchasing order of eyeglasses confirmed by the user in step g), tracking order status and permitting the user to receive notifications regarding the said purchasing order.

12. A method for ordering eyeglasses according to claims 11, wherein user can arbitrarily select and perform any one or more of the steps from a) to h) before confirming the purchasing order of eyeglasses.

13. A method for ordering eyeglasses according to claims 11, wherein
the predefined distance W1 is determined from a 1^{st} look up table in dependence upon the style of eyeglass frame input by the user; and
the predefined parameter H1 is determined from a 2^{nd} look up table in dependence upon the style of lens-holder input by the user.

14. A method for ordering eyeglasses according to claim 13, wherein
the 1^{st} look up table correlate ranges of the predefined distance W1 to the styles of eyeglass frames such that
0cm < W1≤2.0 cm correspond to Sporty styles of eyeglass frames;
2.0 cm < W1 < 3.5 cm correspond to General-Use styles of eyeglass frames; and
3.5 cm ≤ W1 correspond to Stylist styles of eyeglass frames;
the 2^{nd} look up table correlate ranges of the predefined parameter H1 to the styles of lens holders such that
0cm < H1 < 2.5 cm correspond to Narrow styles of lens holders;
2.4 cm < H1 < 4.0 cm correspond to Normal styles of lens holders; and
4.0 cm < H1 correspond to Oversize styles of lens holders.

15. A method for ordering eyeglasses according to claim 14, wherein the predefined distance Y1 is 1 cm.
